# EUROPEAN PATENT SPECIFICATION

(11) **EP 1 833 190 B1**
(45) Date of publication and mention of the grant of the patent: **04.08.2010**
(21) Application number: 06110747.0
(22) Date of filing: 07.03.2006
(51) Int. Cl.: H04L 9/06

(54) **Table splitting for cryptographic processes**
Tabellenteilung für kryptografische Verfahren
Division de table pour procédés cryptographiques

(43) Date of publication of application: 12.09.2007
(73) Proprietor: RESEARCH IN MOTION LIMITED, Waterloo, Ontario N2L 3W8 (CA)
(72) Inventor: Gebotys, Catherine Helen, Waterloo, Ontario N2K 3L4 (CA)
(74) Representative: Rickard, David John

(56) References cited:
- EP-A- 1 267 514
- EP-A- 1 601 132
- US-A1- 2005 232 430
- KOUICHI ITOH ET AL: "DPA Countermeasure Based on the Masking Method" PROCEEDINGS OF ICICS. INTERNATIONAL CONFERENCE ON INFORMATION COMMUNICATIONS AND SIGNAL PROCESSING, 6 December 2001 (2001-12-06), pages 440-456, XP002297044
- GEBOTYS C.: 'Third Order Differential Analysis and Split Mask Countermeasure for Low Energy Embedded Processors' INTERNET CITATION no. CACR-2004-11, 01 January 2004, UNIVERSITY OF WATERLOO, pages 1 - 27, XP002455442
- GEBOTYS C.: 'Differential Analysis of a Low Energy Table-Based Countermeasure for Secure Embedded Systems' INTERNET CITATION no. CACR-2005-24, 01 January 2005, UNIVERSITY OF WATERLOO, pages 1 - 28, XP002455441

## Description

This invention relates generally to computing systems and, more particularly, to computing systems implementing encryption operations and countermeasures to resist attacks such as power analysis attacks on such operations.

Computing systems often require operations to be carried out in a secure manner. For embedded computing devices and for pervasive systems, security of operation is often crucial. To ensure operations and communications are secure, such systems employ cryptographic methods. The implementation of such a cryptographic method must itself be secure. However, cryptographic methods are subject to attacks. One type of non-invasive attack on computing devices implementing cryptographic methods is known as a power analysis attack. Another type of attack is based on electromagnetic analysis of the device carrying out a cryptographic process. Although the description below references power attacks, it will be appreciated that the countermeasures discussed are also applicable for electromagnetic analysis attacks.

A power analysis attack involves the monitoring of the power consumption of one or more components of a device while the device executes a cryptographic method. Statistical methods are subsequently used to derive information intended to be kept secret by the cryptographic method. Differential power analysis (DPA) is an example of a power analysis attack that may be used against cryptographic operations that include the indexing of one or more tables (substitution tables or "S-boxes) by a combination of secret key and plaintext values ("Differential Power Analysis", P. Kocher, CRYPTO'99, Lecture Notes in Computer Science, 1666, pp. 388-397, 1999, Springer-Verlag).

Different countermeasures to thwart such attacks have been suggested including frequent regeneration of tables using different random output masks ("Securing the AES Finalists Against Power Analysis Attacks", T. Messerges, FSE 2000, Lecture Notes in Computer Science, 1978, pp. 150-164, 2001, Springer-Verlag) and using fixed value masking, where only a fixed number of masks is used ("DPA countermeasure based on the 'masking method"', K. Itoh et al. , ICICS 2001, Lecture Notes in Computer Science, 2288, pp. 440-456, 2001, Springer-Verlag). However, the use of either regenerated tables or multiple masked tables or transformations requires additional memory, power and processor resources that are not always available and the allocation of which is typically not desirable.

EP 1601132 discloses an improved countermeasure for a cryptographic process or system in which individually defined random values are used for masks of entries in substitution tables to define masked substitution tables. However, the step of splitting the substitution tables prior to masking the tables, producing sets of split masked tables, is not disclosed.

US2005/232430 discloses a countermeasure for differential power analysis attacks on computing devices. The countermeasure includes the definition of a set of split mask values. The split mask values are applied to a key value used in conjunction with a masked table defined with reference to a table mask value. The set of n split mask values are defined by randomly generating n-1 split mask values and defining an nth split mask value by exclusive or'ing the table mask value with the n-1 randomly generated split mask values.

Kouichi Itob et al "DPA Countermeasure based on the Masking Method", Proceedings of ICICS, International Conference on Information Communications and Signal Processing, 6 December 2001, pages 440 to 456 discloses a probabilistic differential power analysis countermeasure based on a masking method that requires little random access memory and thus is suitable for low cost smart cards.

C. Gebotys Third Order Differential Analysis and a Split Mask Countermeasure for Low Energy Embedded Processors", University of Waterloo Technical Report No. CACR 2004-11, pages 1 to 27 discloses a security countermeasure in which data values output from S-box tables are decorrelated through random masking. Further security is provided by dynamically refreshing random masks and providing more than one mask tables. Additional mask tables may be created by splitting the masks. According to the reference a *n^{th}* order differential electromagnetic analysis attack may be thwarted by splitting a mask *m* into *n*+1 masks, with an additional storage overhead of n mask tables.

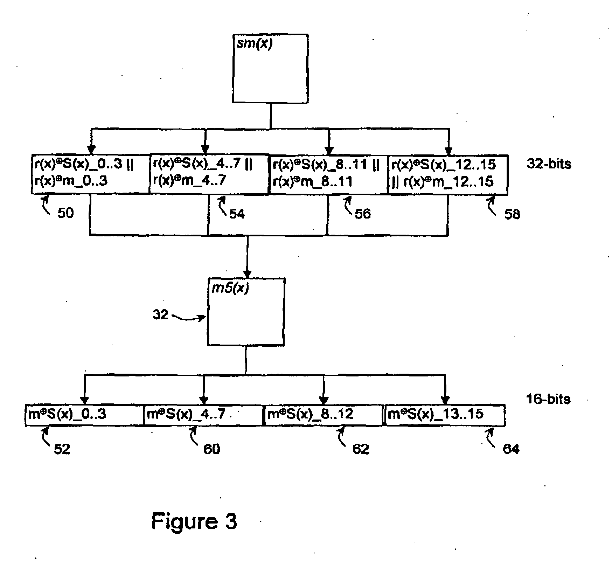

C. Gebotys "Third Order Differential Analysis and A Split Mask Countermeasure for Low Energy Embedded Processors", University of Waterloo Technical Report No. CACR 2005-24, pages 1 to 28 discloses a security countermeasure in which masking is achieved by generating sets of split masks that are used to mask an (de)encryption key. Figure 3 illustrates a process where a master key is masked with the split masks before being applied to plaintext input. By masking the master key with split masks and using masked keys throughout a cryptographic process, differential electromagnetic analysis is more difficult as power samples must be attained immediately after the new master key has been received.

Hence there is a need for cryptographic countermeasures which may thwart differential power and related attacks but which have low latency overheads.

### Brief Description of the Drawings

In drawings which illustrate by way of example only a preferred embodiment of the invention,
Figure 1 is a block diagram illustrating a simple example of split table generation in accordance with the preferred embodiment;
Figure 2 is a block diagram illustrating a use of split tables in accordance with the preferred embodiment in an AES (Advanced Encryption Standard) encryption process;
Figure 3 is a block diagram illustrating a simple example of the recombination of data from a masked table in accordance with the preferred embodiment;
Figure 4 is a block diagram illustrating the step of refreshing values in a split table in accordance with the preferred embodiment;
Figure 5 is a block diagram showing an example of the preferred embodiment in which a single original substitution table and two sets of random values are used to generate four split masked substitution tables; and
Figure 6 is a block diagram showing an example of the preferred embodiment in which a single original substitution table and three sets of random values are used to generate four split masked substitution tables.

### Description of Preferred Embodiments

According to an aspect of this invention there is preferably provided an improved countermeasure for a cryptographic process or system.

According to an aspect of this invention, there is preferably provided a computing device implemented method for executing a multiple split, masked substitution table cryptographic process resistant to cryptographic attack on the computing device, the cryptographic process comprising cryptographic steps based on a defined cryptographic process, the defined cryptographic process accepting an input, generating an output, and utilizing one or more originally-defined substitution tables; the cryptographic process accepting the input and generating a masked output equivalent to the output as masked by the mask value; the method comprising the steps of: defining a mask value, generating, for each of the one or more originally-defined substitution tables, a set of two or more split, masked substitution tables for that originally-defined substitution table by masking data word entries in that originally-defined substitution table with a corresponding at least one random value data word and masking a one of the corresponding at least one random value data word with the mask value to form split table entries, and distributing bits of the split table entries according to a pre-determined distribution arrangement to form entries in the set of two or more split, masked substitution tales, the set of two or more split, masked substitution tables being used in place of that originally-defined substitution table and the mask value in the cryptographic process, executing on the input the cryptographic steps by inputting copies of the input into the generated sets of split, masked substitution tables to generate a set of split, masked substitution table outputs, and combining the set of split, masked substitution table outputs to obtain the masked output equivalent to the output as masked by the mask value.

According to a further aspect of this invention, there is preferably provided a computing device program product for carrying out a cryptographic process so as to resist cryptographic attacks, the computing device program product including a computing device usable medium having computing device readable program product code embodied in the medium, the program code being executable by a processor of a computing device, apparatus and/or system for implementing the above method

According to a further aspect of this invention, there is preferably provided a computing device or apparatus for executing a multiple split, masked substitution table cryptographic process resistant to cryptographic attack, the cryptographic process comprising cryptographic steps based on a defined cryptographic process, the defined cryptographic process accepting an input, generating an output, and utilizing one or more originally-defined substitution tables (8); the cryptographic process accepting the input (29) and generating a masked output equivalent to the output; the computing device, apparatus or system comprising: means for defining a mask value, means for generating, for each originally-defined substitution table, a set of two or more split, masked substitution tables (24, 26) for that originally-defined substitution table by masking data word entries in that originally-defined substitution table (8) with a corresponding at least one random value data word and masking a one of the corresponding at least one random value data word with the mask value to form split table entries, and distributing bits of the split table entries according to a pre-determined distribution arrangement to form entries in the set of two or more split, masked substitution tables, the set of two or more split, masked substitution tables (24, 26) being usable in place of that originally-defined substitution table (8) and the mask value in the cryptographic process, means for executing on the input, the cryptographic steps by inputting copies of the input (29) into the generated sets of split, masked substitution tables (24, 26) to generate a set of split masked table outputs, and means for combining (32, 33) the set of split, masked substitution table outputs to obtain the masked output (34) corresponding to the output of the defined cryptographic process as masked by the mask value.

According to a further aspect of this invention, there is preferably provided a data processing system or network including at least one computing device or apparatus according to the above aspect.

Advantages of a preferred embodiment include increasing the resistance to a DPA attack or other similar cryptographic attack on a device implementing the preferred embodiment due to the parallelism of the encryption carried out in accordance with the preferred embodiment. In addition, the use of table splitting as described in the preferred embodiment makes a higher order cryptographic attack such as a DPA attack more difficult due to a reduction in the number of available samples. For example, a single power sample reflecting data including both a random mask bit and a masked table output bit is potentially obtainable, but such a single available sample may not be sufficient for a viable higher order DPA attack.

Advantages include the implementation of varying masks for substitution tables that incur reduced overhead costs in energy, performance and program code. Such limited overhead permits the use of this countermeasure approach with devices such as wireless mobile devices where security is required for the operations carried out by the devices but in which constraints on power and processor performance are potential concerns. Table values are re-masked as the values are accessed (in contrast to an approach that requires a full table regeneration step) and many random masks are potentially used.

Cryptographic operations implemented in computing devices may use substitution tables (S-tables or S-boxes). For example, in AES and in Triple DES (Triple Data Encryption Standard, or "3DES"), multiple S-boxes are utilized in the process of encryption of plaintext and in the decryption of cipher text. To provide countermeasures for security attacks on such cryptographic operations the input and the output of such substitution tables may be masked. The security provided by such a masking of the table output may, however, itself be subject to attack.

The preferred embodiment may be implemented as a computer program product that includes program code that operates to carry out the steps in the process described. The preferred embodiment may be implemented as a computer system (which includes a subsystem or system defined to work in conjunction with other systems) for encryption that includes elements that execute the functions as described. The computer system of the preferred embodiment may be defined by, and the computer program product may be embodied in, signals carried by networks, including the Internet or may be embodied in media such as magnetic, electronic or optical storage media. The process described may be implemented in a computing device as a method to be carried out by a combination of computing code and hardware embodied in the computing device (the process being in this case a computing device-implemented method). Computing devices on which the preferred embodiment is able to be implemented include full-featured computers or network equipment, for example. However, it is also contemplated that the preferred embodiment will be implemented on mobile devices such as wireless handheld mobile computing devices in which resources such as power, memory and processing capacity are constrained by desired limits on the size and weight of the devices. In a data processing device such as a wireless handheld mobile device it is advantageous to have data stored in an encrypted manner to prevent unauthorized access to information of the proper user. The preferred embodiment is intended to be implemented, for example, to prevent such encrypted data being made available to unauthorized individuals.

The preferred embodiment is described with reference to an example showing encryption steps for the AES encryption process. However, it will be appreciated that the preferred embodiment may be implemented with respect to decryption processes and to other cryptographic processes that include keys and substitution tables and for which countermeasures for attacks such as DPA are desirable. The substitution tables and the tables generated according to the preferred embodiment may be implemented using one of the different available data structures definable in a data store on a computing device such as a mobile communications device. As will be appreciated by those skilled in the art, the tables comprise a set of values, stored in a data store on a computing device, in accordance with a selected data structure. As is described below, the values making up the tables are represented as data words comprising bits, as is understood by those skilled in the art.

The masking referred to in the description of the preferred embodiment is carried out by the use of a bit-wise exclusive-or operation (XOR) typically carried out with respect to two defined data words. However, other masking operations may be used. For example arithmetic masking (involving the use of addition and/or subtraction in place of the exclusive-or operation) may alternatively be used.

According to the preferred embodiment, a set of split masked tables is generated based on an original substitution table (defined for use in a cryptographic process) and a mask value. The values in the split masked tables are generated such that the split masked tables may be used in place of the combination of the original substitution table and mask value in the cryptographic process. As is described, with a data reassembly step the output of the cryptographic process using the split masked tables will be the same as that achievable with the original substitution table and mask value.

Although the preferred embodiment contemplates the generation (and refreshing) of defined split masked tables which are generated as an initial step in a modified cryptographic process, it is understood that the split masked tables may be partially generated at one time or may be implemented such that the table entries are generated as required without the entire table being generated at one particular time. In any one of these implementations, the split masked substitution table entries will be available for use in the cryptographic process as is described in the case where the tables are initially defined and are persistently stored (with the refresh steps described below). Further, it will be understood that the random value data words and mask values referred to below may be defined by the preferred embodiment including a random-value generator or a pseudorandom value generator, or may be defined by the preferred embodiment system or method invoking an independent process or system for providing such random values.

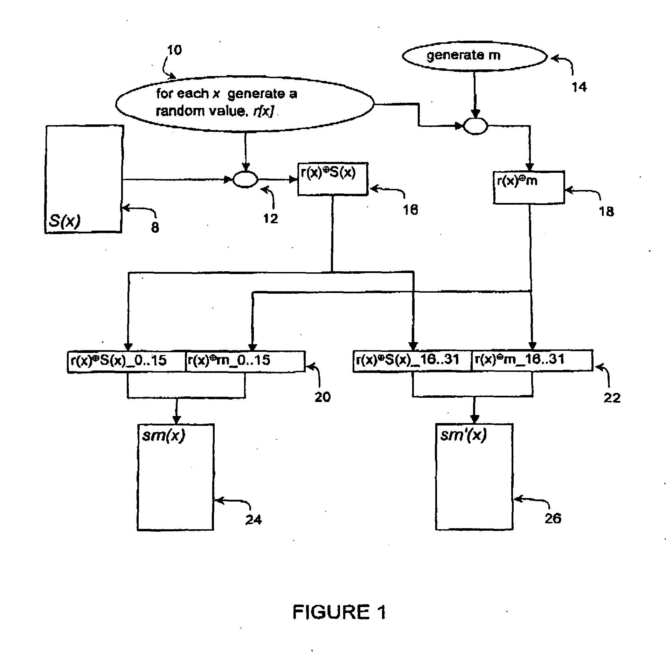

Figure 1 shows a simple example in which S(x), an original substitution table 8 (S-box), is used to generate a pair of split, masked substitution tables 24, 26 (sm(x) and sm'(x)) in accordance with the preferred embodiment. In the example referred to in Figure 1, each entry S[x] in original substitution table 8 comprises a data word of length 32 bits. As is shown in block 10 of Figure 1, according to the preferred embodiment, a set of random value data words r(x) is generated such that there is a random value data word r[x] for each entry S[x] in original substitution table 8. As the figure also shows, each random value data word r[x] is exclusive or'ed (at exclusive or 12) with the corresponding data word S[x] (in general in the Figures, the exclusive or operation is denoted by a small oval having two input values). Each of the set of random values r(x) is also combined with a single randomly-generated mask value m (the generation step is shown in block 14 in Figure 1). The exclusive or of the data word r[x] with the data word value m (exclusive or 15), and the exclusive or of the data word r[x] with the original S-box value S[x] (12) form split table entry pairs 16,18 (denoted S(x)⊕r(x), r(x)⊕m, respectively). In the preferred embodiment, the maskings described above are carried out for all values x in original substitution table S(x). As will be appreciated by those skilled in the art, it is possible to mask only some values in the original substitution table. However, with such an approach the strength of the countermeasure may be reduced or compromised.

In Figure 1, the pair of split, masked tables 24, 26 is defined using the set of split table entry pairs 16, 18 as shown with respect to sm(x) and sm'(x). The Figure 1 example distribution arrangement for the split table entry pairs is shown by the combination of (concatenation of) r[x]⊕S[x]_0..15 with r(x)⊕m_0..15 (shown as data word 20) and of r[x]⊕S[x]_16..31 with r[x]⊕m_16..31 (data word 22) as shown in Figure 1. The notation "_x..y" denotes bits at positions x through y inclusive in a data word. Therefore, "r[x]⊕S[x]_0..15 represents the first 16 bits of the 32-bit data word for the value r[x]⊕S[x] and the notation "r[x]⊕S[x]_16..31" represents the last 16 bits of the same data word. Thus Figure 1 shows the first 16 bits of each r[x]⊕S[x] data word being combined with the first 16 bits of each r[x]⊕m data word to create a 32-bit data word (shown as data word 20) which forms an entry in split, masked substitution table sm(x) (table 24). Similarly, Figure 1 shows sm'(x) (table 26) being defined by data word 22 which is generated by concatenating the last 16 bits of the respective split table entry pairs 16, 18.

As is referred to above, each r[x]⊕S[x] value (16) has a data word representation as does each r[x]⊕m value (18). Each of the bits in each of the data words in the split table entry pair has a bit location within its data word. According to the preferred embodiment, bit pairs made up of one bit from each of the table entry pair, each having correspondingly selected and equivalent source bit locations, are placed in the same word in one of the split masked substitution tables. In other words, if a bit at bit location i from the data word for the value r[x]⊕S[x] is placed in a data word in sm[x], then for proper split mask table definition the corresponding bit (location i) from r[x]⊕m is placed in the same data word in sm[x]. The same condition pertains to the definition of split masked substitution table sm'(x) in the example of Figure 1.

As is apparent, for the simple example shown in Figure 1, the constraint set out above is met. The word forming a table entry for a split masked table is generated by a concatenation of one half of the split table entry data word pair with the corresponding half of the other data word in the split table entry pair. However, the preferred embodiment is not limited to this particular distribution arrangement of the bits from the split table entry pairs to form data words for the entries in the split mask substitution tables. Rather, as long as the distribution arrangement is carried out in a defined manner (effectively according to a pre-selected pattern) permitting reassembly of the data as described below, and as long as the condition set out above for proper split mask table definition is satisfied, the bits in the entries in split masked substitution tables may be arranged to take on any desired pattern. The simple concatenation of bits from the split table entry pair as shown in Figure 1 need not be used to define the location of bits in the words of each split mask table, although such an arrangement or pre-selected pattern has the advantage of simplicity.

The split masked substitution tables defined or generated in accordance with the preferred embodiment are able to be used in cryptographic processes in which the original substitution table was usable with a mask value. The split masked tables are provided with input as is otherwise defined in the cryptographic process. The output of the split masked tables will, taken together, be data values whose data word length is larger than the data word length of the output of a single (not split) substitution table. Consequently, where split masked tables are used, there are data reassembly steps taken, in addition to the originally defined cryptographic process steps, to obtain the output expected from the cryptographic process. These steps involve the bits in the output data being appropriately exclusive or'ed with each other. On a bit-wise basis, this exclusive or operation provides a value that is based on the masking of the original substitution table. A further step is carried out for reassembling the set of such bits to place them in order corresponding to the original bit order of the data words input to the substitution table. This reordering is based upon the pre-selected pattern that was used to generate the various data words defining the split masked substitution tables.

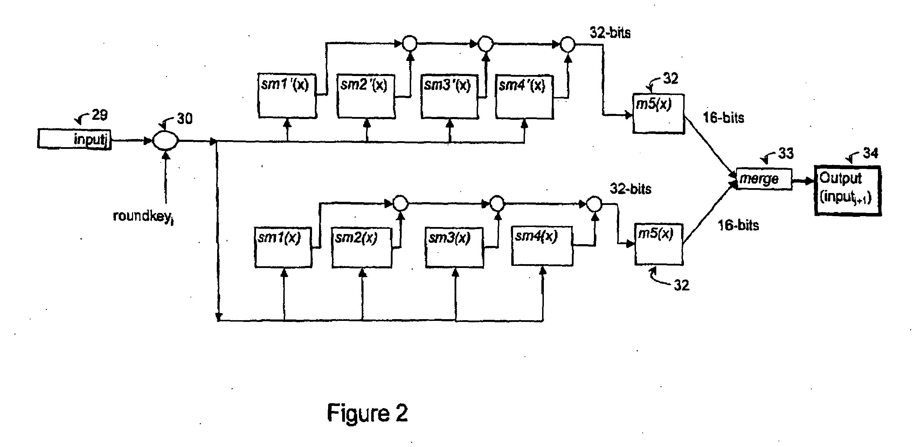

An example of both the use of split masked substitution tables and of the reassembly of the output data based on the distribution arrangement of the bits in those tables is shown in Figures 2 and 3. Figure 2 is a block diagram that shows a high-level representation of an example of the preferred embodiment as applied to certain AES encryption steps (using table implementation of AES for high performance as described in Dr. Brian Gladman, "A Specification for Rijndael, the AES Algorithm", at
fp.gladman.plus.com/cryptography_technology/rijndael/aes.spec.311.pdf, 15 April 2003 (pages 18-19).). Figure 2 shows inputⱼ (29) for a set of four substitution tables (the value sj/tj in the table implementation of AES referenced above). The substitution tables for the AES encryption process are represented in the Figure 2 example by the split masked tables sm1(x), sm2(x), sm3(x), sm4(x) and corresponding split masked tables sm1'(x), sm2'(x), sm3'(x), sm4'(x). The AES cryptographic process as described in Gladman, above, calls for four different substitution tables (S1, S2, S3, S4, not shown). These four tables are subject to a split masking operation (as suggested in Figure 1). The result is the two sets of split masked substitution tables shown in Figure 2.

In the Figure 2 example the words in the split masked tables are 32-bits in length and each of the pairs of split masked tables (sm1(x) and sm1'(x) and so forth) are defined as described above with respect to the split masked table generation shown in Figure 1. As may be seen in Figure 2, the AES input values are applied to each of the two sets of split masked tables and the encryption is carried out in accordance with the AES process for each of the two sets of tables. The output from each of the two sets of split masked substitution tables is a 32-bit word value. The 32-bit output data words are each applied as input to a merge table denoted m5(x) (table 32 shown in Figure 2). This merge table is constructed to merge the bits in the 32-bit output data words by exclusive or'ing the bits that have been processed by (exclusive or'ed by) the r[x] ⊕S[x] values with the corresponding bits processed by the r[x]⊕m values. By the table being defined to carry out this operation for two bits in the word, the resulting bit value will be effectively processed by the value m⊕S[x]. Consequently, the effect is the same as if the masked substitution value (m⊕S[x]) had been applied to the input, without that masked value having been directly applied to the input.

The output of each of the two copies of the m5(x) table 32 as shown in Figure 2 will be a word having half the bit-length of the 32-bit data words generated by each set of the split masked substitution tables. In the example of Figure 2, the output of each copy of m5(x) table 32 is a data word with a bit-length of 16. The merge box 33 in Figure 2 illustrates a further reassembly step by which the bits for each data word are placed into their correct bit-order for the output (34) of the masked substitution table process. In the example of Figures 2, the correct bit-order is defined by concatenating the two resulting data values together as the data words in the split masked tables are defined by the concatenation operation. As indicated above, other more complex patterns of bits may be used in defining the split masked tables and in such cases, the appropriate mapping of bits required will be carried out in merge step 33 shown in Figure 2.

The details of the operation of m5(x) table 32 are shown in the block diagram of Figure 3. The m5(x) table 32 takes an 8-bit data word as input and produces a 4-bit data word as output (Figure 2 shows m5(x) table 32 used to accept 32-bit input and to produce 16-bit output - achievable by repeated operation of m5(x) table 32 as described below).

In Figure 3 the symbol ∥ represents the concatenation operation. The example of Figure 3 shows input for m5(x) table 32 being defined by a set of 16 bits representing the value r[x]⊕S[x] and a further 16 bits representing the values r[x]⊕m. The bits are arranged as shown in Figure 3. The m5(x) table 32 for this example is defined to operate by accepting an 8-bit input and outputting a 4-bit value. The 4-bit value is generated by exclusive or'ing the corresponding bits of the r[x]⊕S[x] and the r[x]⊕m values. For example, in Figure 3 8-bit byte 50 is input to m5(x) table 32 to produce 4- bit byte 52. As will be seen in Figure 3, there are four separate segments 50, 54, 56, 58 of a 32-bit data word that represent the output of a split masked substitution table shown as sm(x) in Figure 3. Figure 3 shows the values that are exclusive or'ed with inputs to split masked substitution table sm(x), defined as shown in Figure 1. Table sm(x) is defined by r(x)⊕S(x) ∥ r(x)⊕m as is described above for Figure 1. Thus the first 8-bit byte 50 is a value that represents the table input exclusive or'ed with value r(x)⊕S(x)_0..3 and with r(x)⊕m_0..3, concatenated. When the two parts of the 8-bit byte 50 are exclusive or'ed with each other, the result is 4-bit byte 52 that is equivalent to the input value exclusive or'ed with m⊕S(x)_0..3. Figure 3 shows the other 8-bit bytes 54, 56, 58 which are defined in a similar manner to byte 50.

As is shown in Figure 3, the result of repeated operation of m5(x) table 32 on bytes 50, 54, 56, 58, is a 16-bit word made up of 4-bit bytes 52, 60, 62, 64. The entire resultant data word is therefore equivalent to the input exclusive or'ed with m⊕S(x], the original substitution table entry, masked with value m.

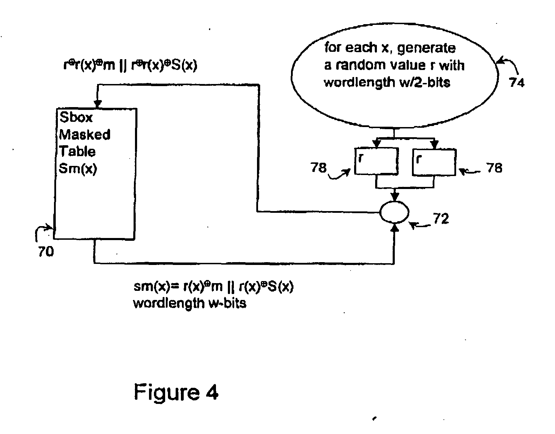

Figure 4 shows the manner in which a split masked substitution table 70 of the preferred embodiment may be refreshed without requiring a full table regeneration step. The preferred embodiment provides that on each access of a table entry in split masked substitution table 70 that table entry will be refreshed using a random masking step (the exclusive or shown as oval 72). In Figure 4, split masked substitution table 70 is shown with an entry sm[x] being defined as r[x]⊕S[x] ∥ r[x]⊕m having word length w-bits. Following access of entry sm[x], the entry value is masked by a randomly generated value r (as shown in elements 74, 76, 78 in Figure 4) to provide a new, refreshed value for the table entry defined as r⊕r[x]⊕s[x] ∥ r⊕r[x]⊕m. As will be appreciated, because both parts of the concatenated value are masked by the same random value r, the masking of the refreshed value may be effectively removed in a straightforward manner. A reassembly step carries out an exclusive or of the bits in the table entries and consequently the masking of the refreshed value r will be cancelled out.

The above approach permits the values in the split masked substitution tables to be refreshed without the necessity to replace or regenerate the full table at any one time. The number of randomly defined masks will be potentially large as new masks are defined for each refresh step after split masked substitution table access.

The description above relating to Figures 1 and 2 shows how two split masked substitution tables may be generated from a single original substitution table using the method and system of the preferred embodiment. However, more than two split masked substitution tables may be generated from a single original substitution table. In the preferred embodiment, the maximum practical number of split masked substitution tables that can be generated from a single original substitution table will depend on the data word length used in the encryption process in which the tables will be employed.

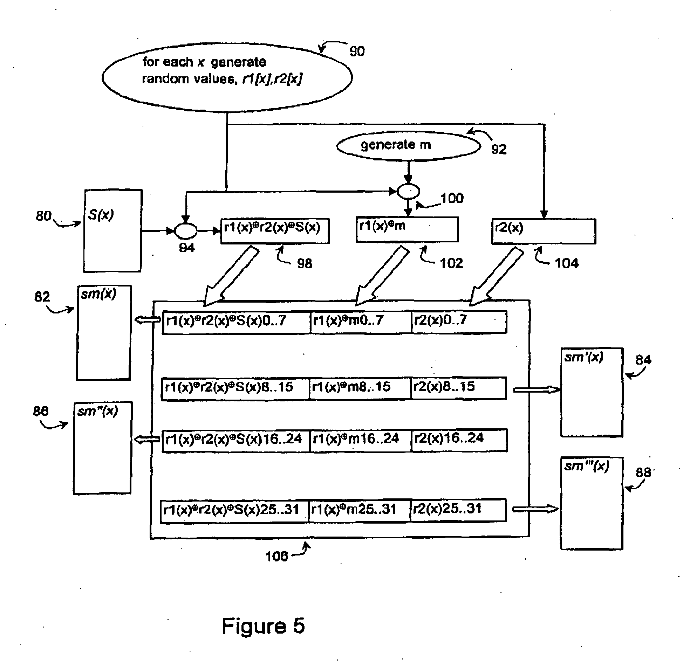

Figure 5 shows a further example in accordance with the preferred embodiment in which a single original substitution table 80 is used to generate four split masked substitution tables 82, 84, 86, 88 (sm(x), sm'(x), sm"(x) and sm'"(x), respectively). In the example of Figure 5, there are two sets of random values r1(x), r2(x) generated (at generator 90) and a single masking value m generated (at generator 92).

The four split masked substitution tables 82, 84, 86, 88 are defined, in the example of Figure 5, using a combination of masked bits and unmasked random bits as is shown in the figure. Each entry S[x] in original substitution table 80 is masked with both the values r1[x] and r2[x], as generated for that entry S[x]. This is shown by the exclusive or operation at 96 resulting in value r1[x] ⊕r2[x] ⊕S[x] shown at masked data word 98 in Figure 5. Further, each r1[x] is masked with value m, as shown at exclusive or 100 resulting in randomized mask data word 102 with value r1[x] ⊕m. The second set of random values r2(x) is used without masking (see data word 104) in the generation of values in the split masked substitution tables 82, 84, 86, 88.

In Figure 5, the combination of values to generate the split masked tables 82, 84, 86, 88 is shown schematically at 106. has will be appreciated, the steps at 106 may be carried out by successive operations of computing device program code or may be carried out by appropriately designed hardware components. Data words 98, 102 and 104, defined as described above for each entry in original substitution table 80, are each split into four parts and those parts combined to generate the split tables.

For the Figure 5 example, as is shown at 106, the first eight bits of each of data words 98,102, 104 are combined to provide the appropriate 24-bit word entry in table sm(x) (split masked substitution table 82). The entry generated for sm(x) is defined as shown in data word 108: the concatenation of the first eight bits of r1[x] ⊕r2[x] ⊕S[x], of r1[x] ⊕m, and of r2[x]. Similarly, entries for split masked substitution tables 84, 86, 88 are defined by data words 110, 112, 114 which reflect the concatenations of the second, third and fourth 8-bit portions of r1[x] ⊕r2[x] ⊕S[x], of r1[x] ⊕m, and of r2[x], respectively, as shown in Figure 5.

As can be seen, this approach to the generation of the split masked substitution tables of the preferred embodiment will potentially produce split masked tables having word lengths different from the original substitution table. This can be seen in the example of Figure 5, in which original substitution table 80 has 32-bit data word entries S[x] while the resultant split masked substitution tables 82, 84, 86, 88 each have 24-bit data word entries. In certain cryptographic operations, such a change in data word length for the entries in the substitution tables may not be significant.

As will be appreciated, the selection of a particular number of random value sets (i.e. r1(x), r2(x),...) will affect the way in which the masking operations are carried out according to the preferred embodiment. If there are n such sets (corresponding to r1(x), ... rn(x) random value sets) then there is a first masking operation defined by r1(x) ⊕...rn(x) ⊕s(x). The resulting data word is then divided across the data words used in generating the split masked substitution tables. To allow for the combination of data words to provide the effect of masking the original substitution table (S(x) ⊕m), the preferred embodiment utilizes an even number of split masked substitution tables.

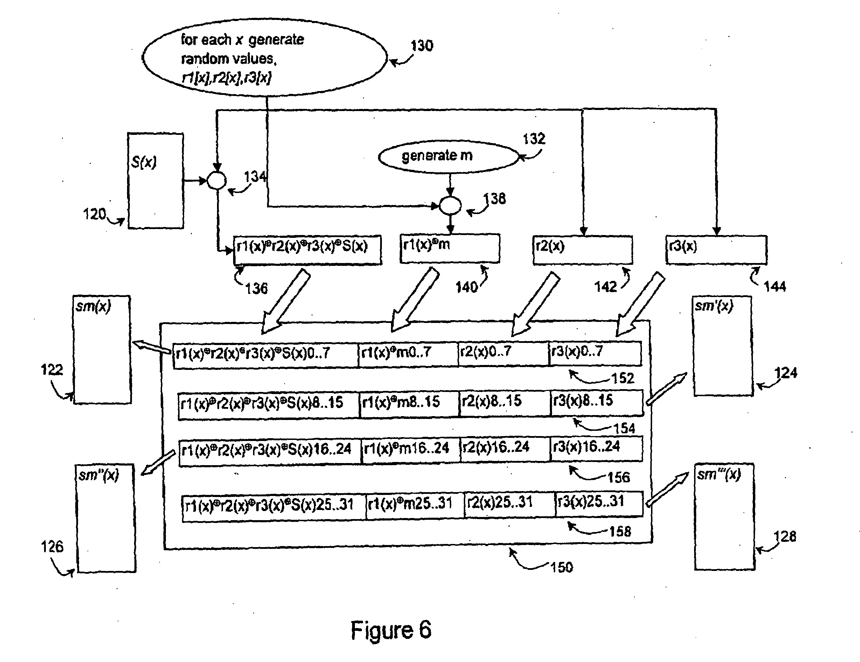

Consequently, when the number of sets of random values, n, used is either 1 or 3, then n+1 substitution tables are required. For example n=1 refers to the case in Figures 1 and 2 utilizing random value set r(x) and requiring only two split masked substitution tables (sm(x) and sm'(x)). The case with 3 sets of random values, r1(x),r2(x),r3(x), is illustrated in Figure 6, as is described in more detail below. When an even number n=2, 4 of random value sets is utilized, (n+2) substitution tables are required. For example n=2 refers to the case just described, where sets of random values are represented by r1(x) and r2(x) as shown in Figure 5 and in which four split masked substitution tables are generated.

Figure 6 shows S(x), single original substitution table 120, used to generate split masked substitution tables 122, 124, 126, 128 (sm(x), sm'(x), sm"(x), s"'(x), respectively). The approach to generation of these split masked tables is similar to that shown in Figure 5. However, there are three sets of random values used and as is shown, the entries in the generated split masked substitution tables are 32-bit words. In the example of Figure 6, this is shown by the generation of three sets of random values r1(x), r2(x) and r3(x) (at generator 130) and the generation of a random values (at generator 132). As was the case with the example of Figure 5, each entry S[x] in original substitution table 120 is masked with each of the generated random values. In the case of Figure 6 this means that the S[x] value is exclusive or'ed (at 134) with each of r1[x], r2[x] and r3[x]. The resulting data word 136 therefore has the value r1[x] ⊕r2[x] ⊕r3[x] ⊕S[x]. The mask value m is masked with each r1 [x] value (exclusive or 138) to give data word 140 with value r1[x] ⊕m. Random values r2(x) and r3(x) are used without masking as shown by data words 142, 144, respectively.

The generation of 32-bit data word split masked substitution tables 122, 124, 126, 128 is carried out in a manner analogous to that described above with reference to Figure 5. In the example of Figure 6, however, there are four data words (136,140,142,144) which are each split into 8-bit bytes for concatenation to generate the data words for the split masked tables. Consequently, there will be a 32-bit word generated for each of the split masked substitution tables in the approach shown in Figure 6.

Specifically, as is shown at 150, the first eight bits of each of data words 136, 140, 142, 144 are combined to provide the appropriate entry in split masked substitution table 122. The entry generated in sm(x) is defined as shown in data word 152: the entry is the concatenation of the first eight bits of r1[x] ⊕r2[x] ⊕r3[x] ⊕S[x], of r1[x] ⊕m, of r2[x], and of r3[x]. Similarly, entries for split masked substitution tables 124, 126,128 are defined by data words 154, 156, 158 which reflect the concatenations of the second, third and fourth 8-bit portions of r1[x] ⊕r2[x] ⊕r3[x] ⊕S[x], of r1[x] ⊕m, of r2 [x], and of r3[x], respectively, as shown in Figure 6 (portions from data words 136, 140, 142 and 144). The result of splitting and subsequent concatenating of the data words 152, 154, 156, 158 is the set of split masked substitution tables 122, 124,126,128. As will be seen, these resultant tables each have a data word that is 32-bits in length.

As was referred to above, the examples in Figures 1 through 6 show a splitting and concatenation of the split values to generate split masked table entries. However, the preferred embodiment may also be implemented without using concatenation, so long as the split masked table entry contains split table entry bit pairs and those pairs are placed in defined locations in the entry so that a combination of the two split table entry pair values can be made to generate the correct masked substitution table entry bit. Furthermore the merging of the split values, illustrated in Figure 2 and Figure 3, may also be implemented using an alternative process to the use of the m5(x) table where the alternative process acts to create the resulting value m⊕S[x]. For example, the shifting of the values by 16 bits and exclusive or operations could be used to produce the resulting value m⊕S[x] for the Figure 1 arrangement, instead of using the m5(x) table.

In the steps shown of Figures 5 and 6, the words of the resulting split masked table entries are generated using a portion of the original S-box table entry, masked by the different set of generated random r(x) values, a portion of one of those values masked by the a first random m value, and a portion of the other generated r(x) random values in the set. These split masked substitution tables may be used in a modified cryptographic process, in which copies of the input value for the cryptographic process is input into each of the generated set of split masked substitution tables.

The reassembly of the data at the conclusion of a cryptographic process using the split masked substitution tables as generated according to steps such as those of Figures 5 or 6 will be carried out in a way analogous to that described for Figures 2 and 3. The table output values for the set of split masked substitution tables will be merged by a set of appropriately defined exclusive or operations. There will then be a further step in which the resulting bits are rearranged into their proper bit order, in accordance with the defined distribution arrangement used to place the bits into the entries in the split masked substitution tables. Similarly, refreshing of split masked substitution table entries may be carried out as is described with respect to the example of Figure 4.

Various embodiments of the present invention having been thus described in detail by way of example, it will be apparent to those skilled in the art that variations and modifications may be made without departing from the invention. The invention includes all such variations and modifications as fall within the scope of the appended claims.

## Claims

1. A computing device implemented method of executing a multiple split, masked substitution table cryptographic process resistant to cryptographic attack on the computing device, the cryptographic process comprising cryptographic steps based on a defined cryptographic process, the defined cryptographic process accepting an input (29), generating an output, and utilizing one or more originally-defined substitution tables (8); the cryptographic process accepting the input (29) and generating a masked output (34) equivalent to the output as masked by the mask value; the method comprising the steps of:
defining a mask value (14),
for each of the one or more originally-defined substitution tables, generating a set of two or more split, masked substitution tables for that originally-defined substitution table by masking data word entries in that originally-defined substitution table with a corresponding at least one random value data word and by masking a one of the corresponding at least one random value data word with the mask value to form split table entries, and distributing bits of the split table entries according to a pre-determined distribution arrangement to form entries in the set of two or more split, masked substitution tables, the set of two or more split, masked substitution tables being used in place of that originally-defined substitution table and the mask value in the cryptographic process,
executing on the input (29) the cryptographic steps by inputting copies of the input (29) into the generated sets of split, masked substitution tables (24, 26) to generate a set of split, masked substitution table outputs, and
combining (32, 33) the set of split, masked substitution table outputs to obtain the masked output (34) equivalent to the output as masked by the mask value.

2. The method of claim 1 wherein the two or more sets of split, masked substitution tables comprises more than two tables and the corresponding at least one random value data word comprises a corresponding at least two random value data words, and wherein the generating step comprises:
generating, for each originally-defined substitution table of the one or more originally-defined substitution tables (8), a set of more than two split, masked substitution tables for said each originally-defined substitution table of the one or more originally-defined substitution tables (8) by masking the data word entries in said each originally-defined substitution table of the one or more originally-defined substitution tables (8) with the corresponding two or more random value data words and masking a one of the corresponding two or more random value data words with the mask value to form, along with the remainder of the corresponding two or more random value data words, split table entries, and distributing bits of the split table entries according to a pre-determined distribution arrangement to form entries in the set of two or more split, masked substitution tables.

3. The method of claim 1 or 2, further comprising the refresh step of refreshing each entry in each of the split, masked substitution tables upon the entry being accessed during execution of the cryptographic steps, the refresh step being accomplished by defining a random refresh data word (74) and masking (72) each bit in the split, masked substitution table entry by the appropriate bit in the random refresh data word.

4. The method of any preceding claim in which the step of combining the set of split, masked substitution table outputs comprises a merge step followed by a reassembly step (32, 33).

5. The method of claim 1, in which the step of generating the set of two or more split, masked substitution tables for that originally-defined substitution table comprises, for data word entries S[x], each entry S[x] having a defined word length in bits, the following steps:
defining (130) n sets of random value data words r1(x)..rn(x), each data word having bits with defined bit locations, each set of random value data words comprising data word entries such that data words r1[x], ... rn[x] correspond to entry S[x] in that originally-defined substitution table, and
generating the set of two or more split, masked substitution tables corresponding to S(x) by, for each entry S[x],
masking (134) the data word S[x] with corresponding data words r1[x],...,rn[x] in the set of random values to define a masked data word (136) having bits with defined bit locations,
masking (138) the mask value with a selected value r1[x] of the corresponding set of random values to define a randomized mask data word (140) for S[x], having bits with defined bit locations, and
generating (150) each of the entries in a split, masked substitution table by selecting bits from the masked data word, the randomized mask data word and, where the size n of the set of random values is 2 or more, the random value data words in the set other than the selected value r1[x], whereby each selected bit used to define each split, masked substitution table entry is selected from a correspondingly defined bit-location in its original data word, each of the bits in the entry in the split, masked substitution table being defined in accordance with a pre-selected pattern.

6. The method of claim 5 in which the selection of bits from the masked data word, the randomized mask data word and, where the size n of the set of random values is 2 or more, the random value data words in the set other than the selected value r1[x] is carried out by selecting contiguous bits from the said data words and the step of generating each of the entries in a split, masked substitution table comprises the step of concatenating the selected contiguous bits to form the entry.

7. The method of claim 6 in which the size n of the set of random values is 1 and the length of the masked data word and of the randomized mask data word is 32 bits, the selection of bits comprising the step of selecting the first 16 bits from the masked data word and from the randomized mask data word to form an entry (20) in a first split, masked substitution table by concatenation and a further selection of bits comprising the step of selecting the second 16 bits from the masked data word and from the randomized mask data word to form an entry (22) in a second split, masked substitution table by concatenation.

8. The method of any one of claims 5 to 7, further comprising the step of refreshing each entry in each of the split, masked substitution tables upon the entry being accessed during execution of the cryptographic process, the refresh step being accomplished by defining a random refresh data word (74) and masking (72) each bit in the split, masked substitution table entry by the appropriate bit in the random refresh data word whereby each bit in the entry corresponding to a bit selected from the masked data word, the randomized mask data word and, where the size n of the set of random values is 2 or more, the random value data words in the set other than the selected value r1 [x], is masked with the same bit from the random refresh data word.

9. The method of any preceding claim in which the defined cryptographic process is an AES or 3DES encryption or decryption process.

10. A computing device program product for carrying out a cryptographic process so as to resist cryptographic attacks, the computing device program product comprising a computing device usable medium having computing device readable program product code embodied in said medium, said program code being executable by a processor of a computing device, apparatus and/or system for implementing the method of any one of claims 1 to 9.

11. A computing device or apparatus for executing a multiple split, masked substitution table cryptographic process resistant to cryptographic attack, the cryptographic process comprising cryptographic steps based on a defined cryptographic process, the defined cryptographic process accepting an input, generating an output, and utilizing one or more originally-defined substitution tables (8); the cryptographic process accepting the input (29) and generating a masked output equivalent to the output; the computing device, apparatus or system comprising:
means for defining a mask value (14),
means for generating, for each of the one or more originally-defined substitution tables ,a set of two or more split, masked substitution tables (24, 26) by masking data word entries in that originally-defined substitution table with a corresponding at least one random value data word and by masking a one of the corresponding at least one random value data word with the mask value to form split table entries, and wherein the means for generating further comprises means for distributing bits of the split table entries according to a pre-determined distribution arrangement to form entries in the set of two or more split, masked substitution tables, the set of two or more split, masked substitution tables (24, 26) being usable in place of that originally-defmed substitution table and the mask value in the cryptographic process,
means for executing on the input, the cryptographic steps by inputting copies of the input (29) into the generated sets of split, masked substitution tables (24, 26)to generate a set of split masked table outputs, and
means for combining (32, 33) the set of split, masked substitution table outputs to obtain the masked output (34) corresponding to the output of the defined cryptographic process as masked by the mask value.

12. The computing device or, apparatus of claim 11 wherein the corresponding at least one random value data word comprises a corresponding two or more random value data words and wherein the means for generating each set of two or more split, masked substitution tables (24, 26) is operative to mask the data word entries with the corresponding two or more random value data words and to mask a one of the corresponding two or more random value data words with the mask value to form, along with the remainder of the corresponding two or more random value data words, the split table entries.

13. A data processing system or network comprising at least one computing device, apparatus or system according to claim 11 or 12.

## Patentansprüche

1. Durch eine Computervorrichtung implementiertes Verfahren der Ausführung eines kryptografischen Prozesses einer mehrfach geteilten maskierten Substitutionstabelle, der kryptografischen Angriffen auf die Computervorrichtung widersteht, wobei der kryptografische Prozess kryptografische Schritte umfasst, die auf einem definierten kryptografischen Prozess basieren, wobei der definierte kryptografische Prozess eine Eingabe (29) annimmt, eine Ausgabe erzeugt und eine oder mehrere ursprünglich definierte Substitutionstabellen (8) verwendet, und der kryptografische Prozess die Eingabe (29) annimmt und eine maskierte Ausgabe (34) erzeugt, die der Ausgabe entspricht, die von dem Maskenwert maskiert wird, wobei das Verfahren folgende Schritte umfasst:
Definieren eines Maskenwerts (14),
für jede der einen oder mehreren ursprünglich definierten Substitutionstabellen Erzeugen einer Gruppe von zwei oder mehreren geteilten maskierten Substitutionstabellen für diese ursprünglich definierte Substitutionstabelle, indem Datenworteinträge in dieser ursprünglich definierten Substitutionstabelle mit mindestens einem entsprechenden Datenwort mit Zufallswert maskiert werden und indem eins des mindestens einen entsprechenden Datenworts mit Zufallswert mit dem Maskenwert maskiert wird, um Einträge geteilter Tabellen zu bilden, und die Verteilung von Bits der Einträge geteilter Tabellen gemäß einer vorherbestimmten Verteilungsanordnung, um Einträge in der Gruppe von zwei oder mehreren geteilten maskierten Substitutionstabellen zu bilden, wobei die Gruppe der zwei oder mehreren geteilten maskierten Substitutionstabellen anstelle dieser ursprünglich definierten Substitutionstabelle und des Maskenwerts in dem kryptografischen Prozess verwendet wird,
Ausführen der kryptografischen Schritte an der Eingabe (29), indem Kopien der Eingabe (29) in die erzeugten Gruppen von geteilten maskierten Substitutionstabellen (24, 26) eingegeben werden, um eine Gruppe von Ausgaben aus geteilten maskierten Substitutionstabellen zu erzeugen, und
Kombinieren (32, 33) der Gruppe von Ausgaben aus geteilten maskierten Substitutionstabellen, um die maskierte Ausgabe (34) zu erhalten, die der von dem Maskenwert maskierten Ausgabe entspricht.

2. Verfahren nach Anspruch 1, wobei die zwei oder mehreren Gruppen von geteilten maskierten Substitutionstabellen mehr als zwei Tabellen umfassen und das mindestens eine entsprechende Datenwort mit Zufallswert mindestens zwei entsprechende Datenwörter mit Zufallswert umfasst und wobei der Erzeugungsschritt Folgendes umfasst:
für jede ursprünglich definierte Substitutionstabelle der einen oder mehreren ursprünglich definierten Substitutionstabellen (8) Erzeugen einer Gruppe von mehr als zwei geteilten maskierten Substitutionstabellen für jede ursprünglich definierte Substitutionstabelle der einen oder mehreren ursprünglich definierten Substitutionstabellen (8), indem die Datenworteinträge in jeder ursprünglich definierten Substitutionstabelle der einen oder mehreren ursprünglich definierten Substitutionstabellen (8) mit den zwei oder mehreren entsprechenden Datenwörtern mit Zufallswert maskiert werden und eins der zwei oder mehreren entsprechenden Datenwörter mit Zufallswert mit dem Maskenwert maskiert wird, um zusammen mit den verbleibenden entsprechenden zwei oder mehreren Datenwörtern mit Zufallswert Einträge geteilter Tabellen zu bilden und gemäß einer vorherbestimmten Verteilungsanordnung Bits der Einträge geteilter Tabellen zu verteilen, um Einträge in der Gruppe von zwei oder mehreren geteilten maskierten Substitutionstabellen zu bilden.

3. Verfahren nach Anspruch 1 oder 2, das des Weiteren den Aktualisierungsschritt umfasst, bei dem jeder Eintrag in jeder geteilten maskierten Substitutionstabelle aktualisiert wird, wenn auf den Eintrag während der Ausführung der kryptografischen Schritte zugegriffen wird, wobei der Aktualisierungsschritt durchgeführt wird, indem ein Zufallsaktualisierungsdatenwort (74) definiert wird und jedes Bit in dem Eintrag der geteilten maskierten Substitutionstabelle mit dem geeigneten Bit in dem Zufallsaktualisierungsdatenwort maskiert (72) wird.

4. Verfahren nach einem der vorhergehenden Ansprüche, bei dem der Schritt des Kombinierens der Gruppe der Ausgaben der geteilten maskierten Substitutionstabelle einen Mischschritt umfasst, auf den ein Wiederzusammensetzungsschritt (32, 33) folgt.

5. Verfahren nach Anspruch 1, wobei der Schritt der Erzeugung der Gruppe von zwei oder mehreren geteilten maskierten Substitutionstabellen für die ursprünglich definierte Substitutionstabelle für die Datenworteinträge S[x], die jeweils eine definierte Wortlänge in Bits aufweisen, folgende Schritte umfasst:
Definieren (130) von n Gruppen von Datenwörtern mit Zufallswert r1(x) bis rn(x), wobei jedes Datenwort Bits mit definierten Bitpositionen aufweist und jede Gruppe von Datenwörtern mit Zufallswert Datenworteinträge umfasst, so dass die Datenwörter r1(x) bis rn(x) dem Eintrag S[x] in der ursprünglich definierten Substitutionstabelle entsprechen, und
Erzeugen der Gruppe von zwei oder mehreren geteilten maskierten Substitutionstabellen, die S(x) entsprechen, und zwar für jeden Eintrag S[x], durch
Maskieren (134) des Datenworts S[x] mit den entsprechenden Datenwörtern r1[x] bis m[x] in der Gruppe von Zufallswerten, um ein maskiertes Datenwort (136) zu definieren, das Bits mit definierten Bit-Positionen aufweist,
Maskieren (138) des Maskenwerts mit einem ausgewählten Wert r1[x] der entsprechenden Gruppe von Zufallswerten, um ein zufällig ausgewähltes Maskendatenwort (140) für S[x] zu definieren, das Bits mit definierten Bit-Positionen aufweist, und
Erzeugen (150) jedes der Einträge in einer geteilten maskierten Substitutionstabelle, indem Bits aus Folgendem ausgewählt werden: dem maskierten Datenwort, dem zufällig ausgewählten Maskendatenwort und, falls die Größe n der Gruppe aus Zufallswerten 2 oder mehr beträgt, den Datenwörtern mit Zufallswert in der Gruppe, die sich von dem ausgewählten Wert r1[x] unterscheidet, wodurch jedes ausgewählte Bit, das dazu verwendet wird, jeden Eintrag der geteilten maskierten Substitutionstabelle zu definieren, aus einer entsprechend definierten Bit-Position in seinem ursprünglichen Datenwort ausgewählt wird, wobei jedes der Bits in dem Eintrag in der geteilten maskierten Substitutionstabelle gemäß einem vorgewählten Muster definiert wird.

6. Verfahren nach Anspruch 5, wobei die Auswahl von Bits aus dem maskierten Datenwort, dem zufällig ausgewählten Maskendatenwort und, falls die Größe n der Gruppe aus Zufallswerten 2 oder mehr beträgt, den Datenwörtern mit Zufallswert in der Gruppe, die sich von dem ausgewählten Wert r1[x] unterscheidet, durchgeführt wird, indem benachbarte Bits aus den Datenwörtern ausgewählt werden, und wobei der Schritt des Erzeugens jedes der Einträge in einer geteilten maskierten Substitutionstabelle den Schritt der Verkettung der ausgewählten benachbarten Bits umfasst, um den Eintrag zu bilden.

7. Verfahren nach Anspruch 6, wobei die Größe n der Gruppe von Zufallswerten 1 beträgt und die Länge des maskierten Datenworts und des zufällig ausgewählten Maskendatenworts 32 Bits beträgt, wobei die Auswahl der Bits den Schritt des Auswählens der ersten 16 Bits aus dem maskierten Datenwort und dem zufällig ausgewählten Maskendatenwort umfasst, um einen Eintrag (20) in einer ersten geteilten maskierten Substitutionstabelle durch Verkettung zu bilden, und wobei eine weitere Auswahl von Bits den Schritt der Auswahl der zweiten 16 Bits aus dem maskierten Datenwort und dem zufällig ausgewählten Maskendatenwort umfasst, um einen Eintrag (22) in einer zweiten geteilten maskierten Substitutionstabelle durch Verkettung zu bilden.

8. Verfahren nach einem der Ansprüche 5 bis 7, das des Weiteren den Schritt der Aktualisierung jedes Eintrags in jeder der geteilten maskierten Substitutionstabellen umfasst, wenn auf den Eintrag während der Ausführung des kryptografischen Prozesses zugegriffen wird, wobei der Aktualisierungsschritt durchgeführt wird, indem ein Zufallsaktualisierungsdatenwort (74) definiert wird und jedes Bit in dem Eintrag der geteilten maskierten Substitutionstabelle mit dem geeigneten Bit in dem Zufallsaktualisierungsdatenwort maskiert (72) wird, wodurch jedes Bit in dem Eintrag, das einem Bit entspricht, das aus Folgendem ausgewählt wird: dem maskierten Datenwort, dem zufällig ausgewählten Maskendatenwort und, falls die Größe n der Gruppe aus Zufallswerten 2 oder mehr beträgt, den Datenwörtern mit Zufallswert in der Gruppe, die sich von dem ausgewählten Wert r1[x] unterscheidet, mit demselben Bit aus dem Zufallsaktualisierungsdatenwort maskiert wird.

9. Verfahren nach einem der vorhergehenden Ansprüche, wobei der definierte kryptografische Prozess ein AES- oder 3DES-Verschlüsselungs- oder Entschlüsselungsprozess ist.

10. Programmprodukt für eine Computervorrichtung zur Durchführung eines kryptografischen Prozesses, um kryptografischen Angriffen zu widerstehen, wobei das Programmprodukt für eine Computervorrichtung ein Medium umfasst, das von einer Computervorrichtung verwendet werden kann, wobei sich auf dem Medium Programmproduktcode befindet, den die Computervorrichtung lesen kann, und der Programmcode von einem Prozessor einer Computervorrichtung, einem Gerät und/oder einem System zur Implementierung des Verfahrens nach einem der Ansprüche 1 bis 9 ausgeführt werden kann.

11. Computervorrichtung oder Gerät zum Ausführen eines kryptografischen Prozesses mit mehrfach geteilter maskierter Substitutionstabelle, der kryptografischen Angriffen widersteht, wobei der kryptografische Prozess kryptografische Schritte umfasst, die auf einem definierten kryptografischen Prozess basieren, wobei der definierte kryptografische Prozess eine Eingabe annimmt, eine Ausgabe erzeugt und eine oder mehrere ursprünglich definierte Substitutionstabellen (8) verwendet, wobei der kryptografische Prozess die Eingabe (29) annimmt und eine maskierte Ausgabe erzeugt, die der Ausgabe entspricht, wobei die Computervorrichtung, das Gerät oder das System Folgendes umfasst:
Mittel zum Definieren eines Maskenwerts (14),
für jede der einen oder mehreren ursprünglich definierten Substitutionstabellen Mittel zum Erzeugen einer Gruppe von zwei oder mehreren geteilten maskierten Substitutionstabellen (24, 26), indem Datenworteinträge in dieser ursprünglich definierten Substitutionstabelle mit mindestens einem entsprechenden Datenwort mit Zufallswert maskiert werden und indem eins des mindestens einen entsprechenden Datenworts mit Zufallswert mit dem Maskenwert maskiert wird, um Einträge geteilter Tabellen zu bilden, und wobei das Mittel zur Erzeugung des Weiteren Folgendes umfasst: Mittel zur Verteilung von Bits der Einträge geteilter Tabellen gemäß einer vorherbestimmten Verteilungsanordnung, um Einträge in der Gruppe von zwei oder mehreren geteilten maskierten Substitutionstabellen zu bilden, wobei die Gruppe der zwei oder mehreren geteilten maskierten Substitutionstabellen (24, 26) anstelle dieser ursprünglich definierten Substitutionstabelle und des Maskenwerts in dem kryptografischen Prozess verwendet werden kann,
Mittel zum Ausführen der kryptografischen Schritte an der Eingabe, indem Kopien der Eingabe (29) in die erzeugten Gruppen von geteilten maskierten Substitutionstabellen (24, 26) eingegeben werden, um eine Gruppe von Ausgaben aus geteilten maskierten Tabellen zu erzeugen, und
Mittel zum Kombinieren (32, 33) der Gruppe von Ausgaben aus geteilten maskierten Substitutionstabellen, um die maskierte Ausgabe (34) zu erhalten, die der Ausgabe des definierten kryptografischen Prozesses entspricht, die von dem Maskenwert maskiert wird.

12. Computervorrichtung oder Gerät nach Anspruch 11, wobei das entsprechende mindestens eine Datenwort mit Zufallswert zwei oder mehrere entsprechende Datenwörter mit Zufallswert umfasst, und wobei das Mittel zum Erzeugen jeder Gruppe von zwei oder mehreren geteilten maskierten Substitutionstabellen (24, 26) die Datenworteinträge mit den entsprechenden zwei oder mehreren Datenwörtern mit Zufallswert maskieren kann und eins der entsprechenden zwei oder mehreren Datenwörter mit Zufallswert mit dem Maskenwert maskieren kann, um zusammen mit den verbleibenden entsprechenden zwei oder mehreren Datenwörtern mit Zufallswert die Einträge geteilter Tabellen zu bilden.

13. Datenverarbeitungssystem oder -netzwerk, das mindestens eine Computervorrichtung, ein Gerät oder ein System nach Anspruch 11 oder 12 umfasst.

## Revendications

1. Un procédé implémenté par un dispositif informatique consistant à exécuter un processus cryptographique de tables de substitution masquées divisées multiples résistant à une attaque cryptographique sur le dispositif informatique, le processus cryptographique comportant des étapes cryptographiques basées sur un processus cryptographique défini, le processus cryptographique défini acceptant une entrée (29), générant une sortie, et utilisant une ou plusieurs table(s) de substitution définie(s) au départ (8); le processus cryptographique acceptant l'entrée (29) et générant une sortie masquée (34) équivalente à la sortie telle que masquée par la valeur de masque; le procédé comportant les étapes visant à:
définir une valeur de masque (14),
pour chacune de la ou des table(s) de substitution définie(s) au départ, générer un ensemble d'au moins deux tables de substitution masquées divisées pour cette table de substitution définie au départ en masquant des entrées de mot de données dans cette table de substitution définie au départ avec au moins un mot de données à valeur aléatoire correspondant et en masquant un des au moins un mot de données à valeur aléatoire correspondant avec la valeur de masque pour former des entrées de tables divisées, et distribuer des bits des entrées de tables divisées selon un agencement de distribution prédéterminé afin de former des entrées dans l'ensemble d'au moins deux tables de substitution masquées divisées, l'ensemble d'au moins deux tables de substitution masquées divisées étant utilisé à la place de cette table de substitution définie au départ et de la valeur de masque dans le processus cryptographique,
exécuter sur l'entrée (29) les étapes cryptographiques en entrant des copies de l'entrée (29) dans les ensembles générés de tables de substitution masquées divisées (24, 26) pour générer un ensemble de sorties de tables de substitution masquées divisées, et
combiner (32, 33) l'ensemble de sorties de tables de substitution masquées divisées pour obtenir la sortie masquée (34) équivalente à la sortie telle que masquée par la valeur de masque.

2. Le procédé de la revendication 1 où les au moins deux ensembles de tables de substitution masquées divisées comportent plus de deux tables et l'au moins un mot de données à valeur aléatoire correspondant comporte au moins deux mots de données à valeur aléatoire correspondants, et où l'étape de génération comporte les étapes visant à :
générer, pour chaque table de substitution définie au départ de la ou des table(s) de substitution définie(s) au départ (8), un ensemble de plus de deux tables de substitution masquées divisées pour chaque dite table de substitution définie au départ de la ou des table(s) de substitution définie(s) au départ (8) en masquant les entrées de mot de données dans chaque dite table de substitution définie au départ de la ou des table(s) de substitution définie(s) au départ (8) avec les au moins deux mots de données à valeur aléatoire correspondants et en masquant un des au moins deux mots de données à valeur aléatoire correspondants avec la valeur de masque pour former, avec le reste des au moins deux mots de données à valeur aléatoire correspondants, des entrées de tables divisées, et distribuer des bits des entrées de tables divisées selon un agencement de distribution prédéterminé afin de former des entrées dans l'ensemble d'au moins deux tables de substitution masquées divisées.

3. Le procédé de la revendication 1 ou 2, comportant de plus l'étape de rafraîchissement consistant à rafraîchir chaque entrée dans chacune des tables de substitution masquées divisées au moment de l'accès à l'entrée durant l'exécution des étapes cryptographiques, l'étape de rafraîchissement étant accomplie en définissant un mot de données de rafraîchissement aléatoire (74) et en masquant (72) chaque bit dans l'entrée de table de substitution masquée divisée par le bit approprié dans le mot de données de rafraîchissement aléatoire.

4. Le procédé de n'importe quelle revendication précédente dans lequel l'étape visant à combiner l'ensemble de sorties de tables de substitution masquées divisées comporte une étape de fusion suivie d'une étape de réassemblage (32, 33).

5. Le procédé de la revendication 1, dans lequel l'étape visant à générer l'ensemble d'au moins deux tables de substitution masquées divisées pour cette table de substitution définie au départ comporte, pour les entrées de mot de données S[x], chaque entrée S[x] ayant une longueur de mot définie en bits, les étapes suivantes :
définir (130) n ensembles de mots de données à valeur aléatoire r1(x)..rn(x), chaque mot de données ayant des bits avec des positions binaires définies, chaque ensemble de mots de données à valeur aléatoire comportant des entrées de mot de données de telle sorte que les mots de données r1[x], ... m[x] correspondent à l'entrée S[x] dans cette table de substitution définie au départ, et
générer l'ensemble d'au moins deux tables de substitution masquées divisées correspondant à S(x) en, pour chaque entrée S[x],
masquant (134) le mot de données S[x] avec des mots de données correspondants r1 [x],...,rn[x] dans l'ensemble de valeurs aléatoires pour définir un mot de données masqué (136) ayant des bits avec des positions binaires définies,
masquant (138) la valeur de masque avec une valeur sélectionnée r1[x] de l'ensemble correspondant de valeurs aléatoires pour définir un mot de données de masque randomisé (140) pour S[x], ayant des bits avec des positions binaires définies, et
générant (150) chacune des entrées dans une table de substitution masquée divisée en sélectionnant des bits à partir du mot de données masqué, du mot de données de masque randomisé et, quand la taille n de l'ensemble de valeurs aléatoires est de 2 ou plus, des mots de données à valeur aléatoire dans l'ensemble autres que la valeur sélectionnée r1[x], grâce à quoi chaque bit sélectionné utilisé pour définir chaque entrée de table de substitution masquée divisée est sélectionné à partir d'une position binaire définie de manière correspondante dans son mot de données original, chacun des bits dans l'entrée dans la table de substitution masquée divisée étant défini conformément à un modèle présélectionné.

6. Le procédé de la revendication 5 dans lequel la sélection de bits à partir du mot de données masqué, du mot de données de masque randomisé et, quand la taille n de l'ensemble de valeurs aléatoires est de 2 ou plus, les mots de données à valeur aléatoire dans l'ensemble autres que la valeur sélectionnée r1[x] est réalisée en sélectionnant des bits contigus à partir desdits mots de données et l'étape visant à générer chacune des entrées dans une table de substitution masquée divisée comporte l'étape visant à concaténer lesdits bits contigus sélectionnés pour former l'entrée.

7. Le procédé de la revendication 6 dans lequel la taille n de l'ensemble de valeurs aléatoires est 1 et la longueur du mot de données masqué et du mot de données de masque randomisé est de 32 bits, la sélection de bits comportant l'étape visant à sélectionner les 16 premiers bits à partir du mot de données masqué et à partir du mot de données de masque randomisé pour former une entrée (20) dans une première table de substitution masquée divisée par concaténation et une sélection de bits supplémentaire comportant l'étape visant à sélectionner les 16 autres bits à partir du mot de données masqué et du mot de données de masque randomisé pour former une entrée (22) dans une deuxième table de substitution masquée divisée par concaténation.

8. Le procédé de n'importe laquelle des revendications 5 à 7, comportant de plus l'étape visant à rafraîchir chaque entrée dans chacune des tables de substitution masquées divisées au moment de l'accès à l'entrée durant l'exécution du processus cryptographique, l'étape de rafraîchissement étant accomplie en définissant un mot de données de rafraîchissement aléatoire (74) et en masquant (72) chaque bit dans l'entrée de table de substitution masquée divisée par le bit approprié dans le mot de données de rafraîchissement aléatoire grâce à quoi chaque bit dans l'entrée correspondant à un bit sélectionné à partir du mot de données masqué, du mot de données de masque randomisé et, quand la taille n de l'ensemble de valeurs aléatoires est de 2 ou plus, les mots de données à valeur aléatoire dans l'ensemble autres que la valeur sélectionnée r1[x], est masqué avec le même bit à partir du mot de données de rafraîchissement aléatoire.

9. Le procédé de n'importe quelle revendication précédente dans lequel le processus cryptographique défini est un processus de chiffrement ou de déchiffrement AES ou 3DES.

10. Un produit de programme de dispositif informatique pour réaliser un processus cryptographique de façon à résister à des attaques cryptographiques, le produit de programme de dispositif informatique comportant un support utilisable par un dispositif informatique ayant un code de produit de programme lisible par un dispositif informatique intégré dans ledit support, ledit code de programme étant exécutable par un processeur d'un dispositif, appareil et/ou système informatique pour implémenter le procédé de n'importe laquelle des revendications 1 à 9.

11. Un dispositif ou appareil informatique pour exécuter un processus cryptographique de tables de substitution masquées divisées multiples résistant à une attaque cryptographique, le processus cryptographique comportant des étapes cryptographiques basées sur un processus cryptographique défini, le processus cryptographique défini acceptant une entrée, générant une sortie, et utilisant une ou plusieurs table(s) de substitution définie(s) au départ (8) ; le processus cryptographique acceptant l'entrée (29) et générant une sortie masquée équivalente à la sortie ; le dispositif, l'appareil ou le système informatique comportant :
un moyen pour définir une valeur de masque (14),
un moyen pour générer, pour chacune de la ou des table(s) de substitution définie(s) au départ (8), un ensemble d'au moins deux tables de substitution masquées divisées (24, 26) en masquant des entrées de mot de données dans cette table de substitution définie au départ avec au moins un mot de données à valeur aléatoire correspondant et en masquant un des au moins un mot de données à valeur aléatoire correspondant avec la valeur de masque pour former des entrées de tables divisées, et où le moyen pour générer comporte de plus un moyen pour distribuer des bits des entrées de tables divisées selon un agencement de distribution prédéterminé afin de former des entrées dans l'ensemble d'au moins deux tables de substitution masquées divisées, l'ensemble d'au moins deux tables de substitution masquées divisées (24, 26) étant utilisable à la place de cette table de substitution définie au départ et de la valeur de masque dans le processus cryptographique,
un moyen pour exécuter sur l'entrée, les étapes cryptographiques en entrant des copies de l'entrée (29) dans les ensembles générés de tables de substitution masquées divisées (24, 26) pour générer un ensemble de sorties de tables de substitution masquées divisées, et
un moyen pour combiner (32, 33) l'ensemble de sorties de tables de substitution masquées divisées pour obtenir la sortie masquée (34) correspondant à la sortie du processus cryptographique défini telle que masquée par la valeur de masque.

12. Le dispositif ou l'appareil informatique de la revendication 11 où l'au moins un mot de données à valeur aléatoire correspondant comporte au moins deux mots de données à valeur aléatoire correspondants et où le moyen pour générer chaque ensemble d'au moins deux tables de substitution masquées divisées (24, 26) est opérationnel pour masquer les entrées de mot de données avec les au moins deux mots de données à valeur aléatoire correspondants et pour masquer un des au moins deux mots de données à valeur aléatoire correspondants avec la valeur de masque pour former, avec le reste des au moins deux mots de données à valeur aléatoire correspondants, les entrées de tables divisées.

13. Un système ou réseau de traitement de données comportant au moins un dispositif, appareil ou système informatique selon la revendication 11 ou 12.
